# EUROPEAN PATENT APPLICATION

(11) **EP 1 983 423 A2**
(43) Date of publication of application: **22.10.2008**
(21) Application number: 08007469.3
(22) Date of filing: 16.04.2008
(51) Int. Cl.: G06F 3/12

(54) **Printing system, print data creation apparatus and computer-readable control program for the print data creation apparatus**

(30) Priority: 19.04.2007 JP 2007111022
(71) Applicant: Brother Kogyo Kabushiki Kaisha, Nagoya-shi, Aichi-ken 467-8561 (JP)
(72) Inventor: Osuka, Noriyuki, Nagoya-shi Aichi-ken, 467-8562 (JP); Sago, Akira, Nagoya-shi Aichi-ken, 467-8562 (JP)
(74) Representative: Materne, Jürgen

(57) **Abstract**

In registration processing, the process creates the printer sheet information text file of a printer sheet displayed on a custom label tool screen (S60). Subsequently, the process creates a printer sheet information binary file from this printer sheet information text file (S61). Further, the process displays a printer 3 connected to a personal computer 2 as a printer selection screen on the monitor of the personal computer (S62). Subsequently, the process creates an update file of the firmware for a target printer 3 from the binary file (S63). If the target printer' s power supply is in the ON state, the process transmits the firmware update file to the target printer 3 (S64).

## Description

### BACKGROUND

The present disclosure relates generally to technical fields including a printing system, a print data creation apparatus, and a computer program. More specifically, it relates to a printing system that can simultaneously change a printer setting file in a print data creation apparatus and update firmware of a printer connected to this print data creation apparatus, the print data creation apparatus, and a computer-readable control program for the print data creation apparatus.

In the related art, a printing system is known that prints with a printing apparatus connected to a print data creation apparatus such as a personal computer. In such a printing system, a unit detection switch is provided to a roll paper unit set position in the printing apparatus. If a value indicated by a signal detected by the unit detection switch is not stored in a medium information storage area, it is determined that the set roll paper unit is of a new type. Then, missing information about the new type of roll paper unit (medium) is transmitted to the personal computer. When the printing apparatus receives the medium information about the new type of roll paper unit from the personal computer, medium information acquisition processing will be carried out. In the medium information acquisition processing, the received medium information is stored in the medium information storage area and the firmware of the printing apparatus is updated (see, for example, Japanese Patent Application Laid Open Publication No. 2005-258858).

In the above-described conventional printing system, if the printing apparatus determines that the information about a new print medium is needed, the information of the print medium is acquired from the print data creation apparatus, so that the firmware of the printing apparatus can be updated. However, this method will only update the firmware of the printing apparatus, and the information of a printer driver of the print data creation apparatus is not updated. Therefore, this problem has suffered a problem that the information of the printer driver of the print data creation apparatus does not match the print medium.

### SUMMARY OF THE INVENTION

It is an object of the present invention to provide a printing system, a print data creation apparatus, and a computer-readable control program for the print data creation apparatus that can simultaneously update setting information which is referred to by a printer driver and update information which updates the firmware of a printer, and a corresponding method.

According to the first aspect of the present invention, there is provided a print data creation apparatus as claimed in claim 1.
The apparatus is connectable to a printer for printing on a print medium to create print data to be printed by the printer, the print data creation apparatus comprising: a display device that displays a variety of information, a setting alteration screen display control device that displays a setting alteration screen which is used to change settings of the printer on the display device, a setting file storage device that store a setting file including setting information to be referred by a printer driver of the printer, a setting file alteration device that changes contents of the setting file stored in the setting file storage device based on the settings of the printer changed on the setting alteration screen, an update information creation device that creates update information which updates firmware of the printer in response to a change in the setting file brought about by the setting file alteration device, and an update information transmission device that transmits the update information created by the update information creation device to the printer.

According to the second aspect of the present invention, there is provided a computer-readable control program for a print data creation apparatus connectable to a printer for printing on a print medium to create print data to be printed by the printer, as claimed in claim 7. The control program comprises setting alteration screen display control instructions for displaying a setting alteration screen which is used to change settings of the printer, setting file alteration instructions for changing contents of the setting file including setting information which is referred to by a printer driver of the printer based on the settings of the printer changed on the setting alteration screen, update information creation instructions for creating update information which updates firmware of the printer in response to a change in the setting file brought about by the setting file alteration instructions, and update information transmission instructions for transmitting the update information created by the update information creation instructions to the printer.

According to the third aspect of the present invention, there is provided a printing system as claimed in claim 13.
The system comprises a printing data creation apparatus and a printer that prints the print data on a print medium, the printer including an update information reception device that receives the update information transmitted by the update information transmission device, and a firmware update device that updates the firmware of the printer based on the update information received by the update information reception device.
According to a fourth aspect of the invention, there is provided a method to control a print data creation apparatus, as claimed in claim 14.

### BRIEF DESCRIPTION OF THE DRAWINGS

Exemplary embodiments of the invention will be described below in detail with reference to the accompanying drawings in which:
FIG. 1 is a perspective view of a printer and a personal computer serving as a "print data creation apparatus" that constitute a printing system of the present embodiment;
FIG. 2 is an exploded perspective view of the printer;
FIG. 3 is a perspective view of a roll paper holder (DT roll);
FIG. 4 is a perspective view of a roll paper holder (DK roll) as viewed from underneath;
FIG. 5 is a perspective view showing the printer in a condition where its cover is open;
FIG. 6 is another perspective view showing the printer in a condition where its cover is open;
FIG. 7 is a block diagram showing an electrical constitution of the printer;
FIG. 8 is a conceptual diagram of storage areas of a RAM;
FIG. 9 is a block diagram showing an electrical constitution of the personal computer;
FIG. 10 is a conceptual diagram of storage areas of a RAM of the personal computer;
FIG. 11 is a schematic table of a setting file storage area;
FIG. 12 is an illustration of a custom label tool screen, which is a "setting alteration screen" which is displayed on a monitor of the personal computer and on which an operator enters medium information;
FIG. 13 is an anterior half of a flowchart of setting alteration processing which is performed by the personal computer;
FIG. 14 is a posterior half of the flowchart of the setting alteration processing which is performed by the personal computer;
FIG. 15 is a flowchart of advanced setting processing, which is a subroutine of the setting alteration processing flowchart;
FIG. 16 is an illustration of a screen on which advanced settings are displayed;
FIG. 17 is a flowchart of registration processing, which is a subroutine of the setting alteration processing flowchart;
FIG. 18 is an illustration of a printer selection screen;
FIG. 19 is an illustration of a confirmation screen;
FIG. 20 is an illustration of an update utility screen;
FIG. 21 is an illustration of another update utility screen;
FIG. 22 is an illustration of a further confirmation screen; and
FIG. 23 is an illustration of a further another update utility screen.

### DETAILED DESCRIPTION OF THE PREFERRED EMBODIMENTS

The following will describe a printing system 1 of an embodiment according to the present invention with reference to the drawings.

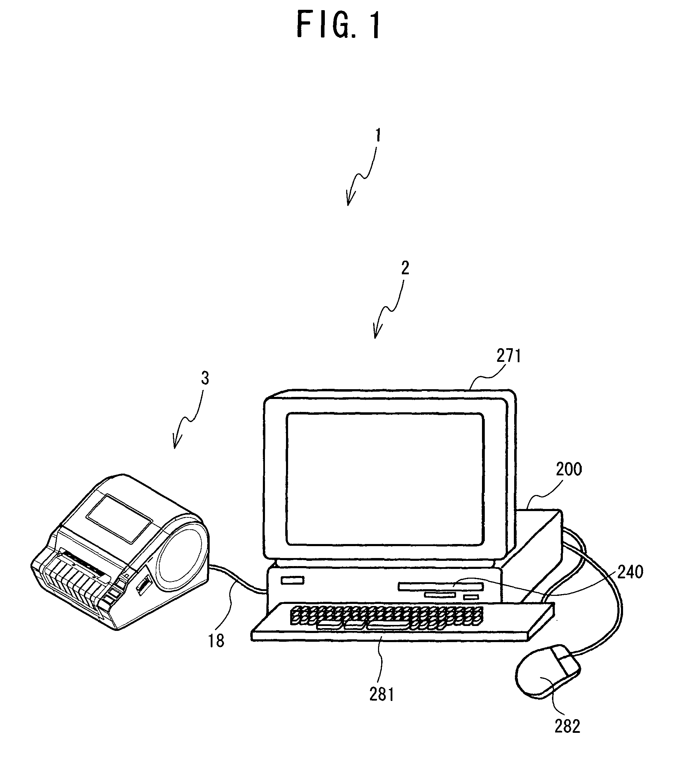

First, the printing system 1 will be described with reference to FIGS. 1-3. The printing system 1 consists of a printer 3 and a known personal computer 2 connected to each other with a cable 18. The printer 3 contains a roll paper holder 67 and prints on a die-cut label 72 stuck to a tape 71 wound around the roll paper holder 67.

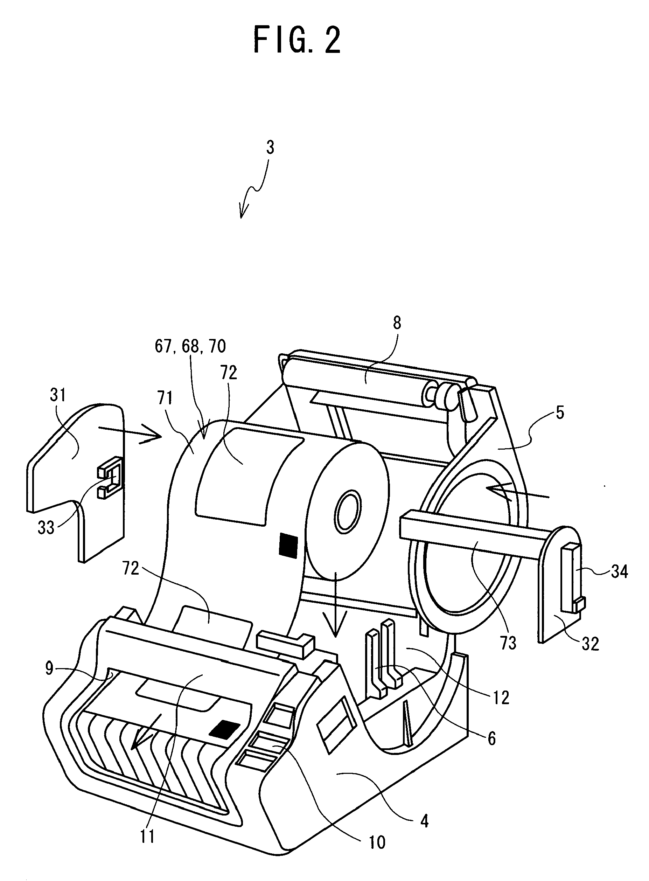

Next, the printer 3 will be described with reference to FIGS. 2-6. As shown in FIGS. 2, 5, and 6, on a lower-part chassis 4 of the printer 3, a cover 5 is axially supported in such a manner that it can swing around. The lower-part chassis 4 under the cover 5 is equipped with a roll paper holder housing section 12 that houses the roll paper holder 67 around which the tape 71 is wound. At the right and left ends of the roll paper holder housing section 12, roll paper holder support sections 6 and 7 are erected respectively which support the roll paper holder 67. It should be noted that inside of the front end of the cover 5, a roller 8 is mounted which guides the tape 71 as it is pulled out of the roll paper holder 67. Further, on the front side of the lower-part chassis 4 of the printer 3, a print mechanism section 11 is mounted which including a thermal head type print mechanism (not shown). Additionally, at the lower part of the print mechanism section 11, a roll paper discharge outlet 9 is formed that discharges the tape 71 which has printed information on it. Moreover, at the right end of the front face of the lower-part chassis 4, an indication lamp 10 is provided.

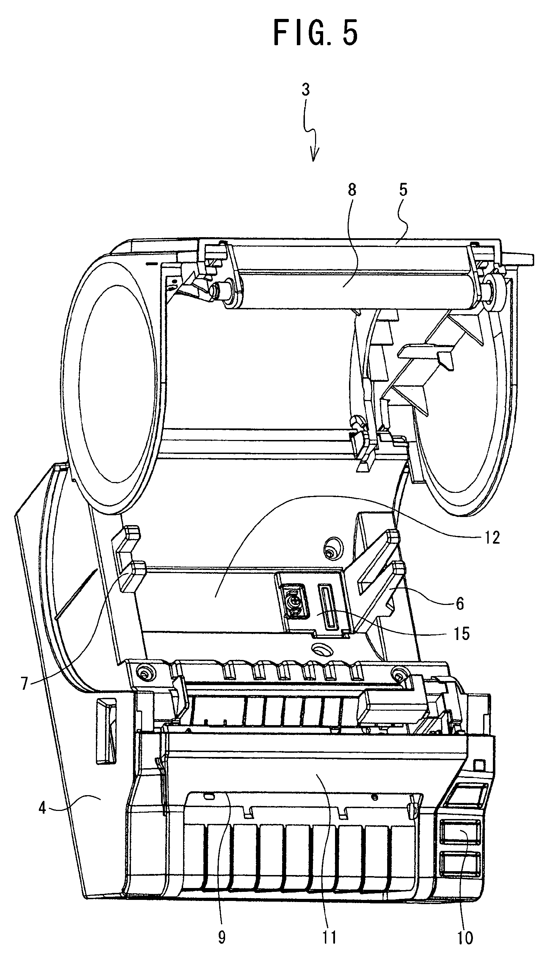

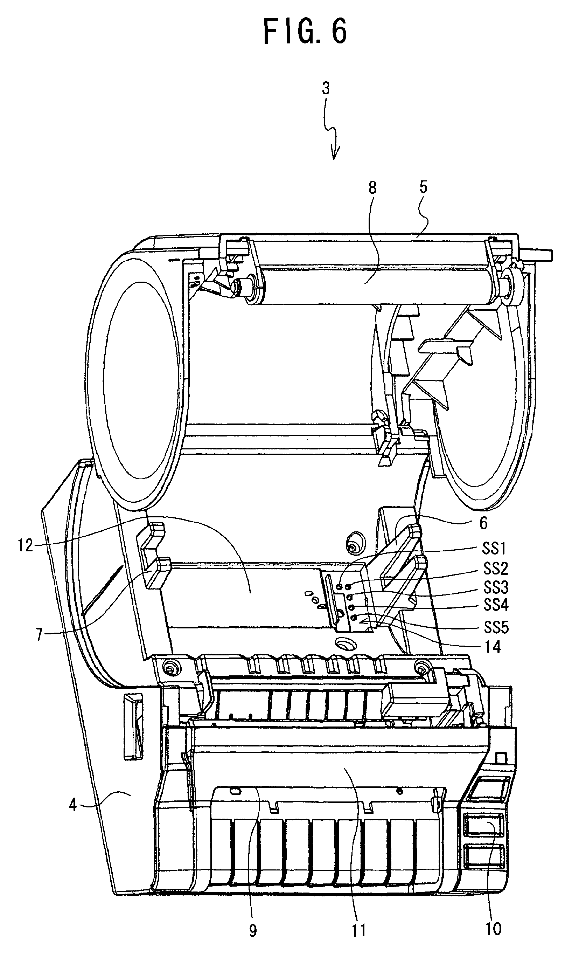

Further, as shown in FIG. 5, a sensor cover 15 is mounted on the right of the roll paper holder housing section 12 with a screw in an attachable-and-detachable manner. A determining concave portion 14 is provided under the sensor cover 15 as shown in FIG. 6 where the sensor cover 15 is detached.

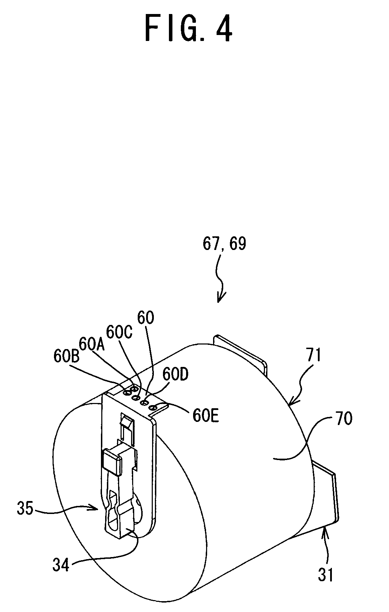

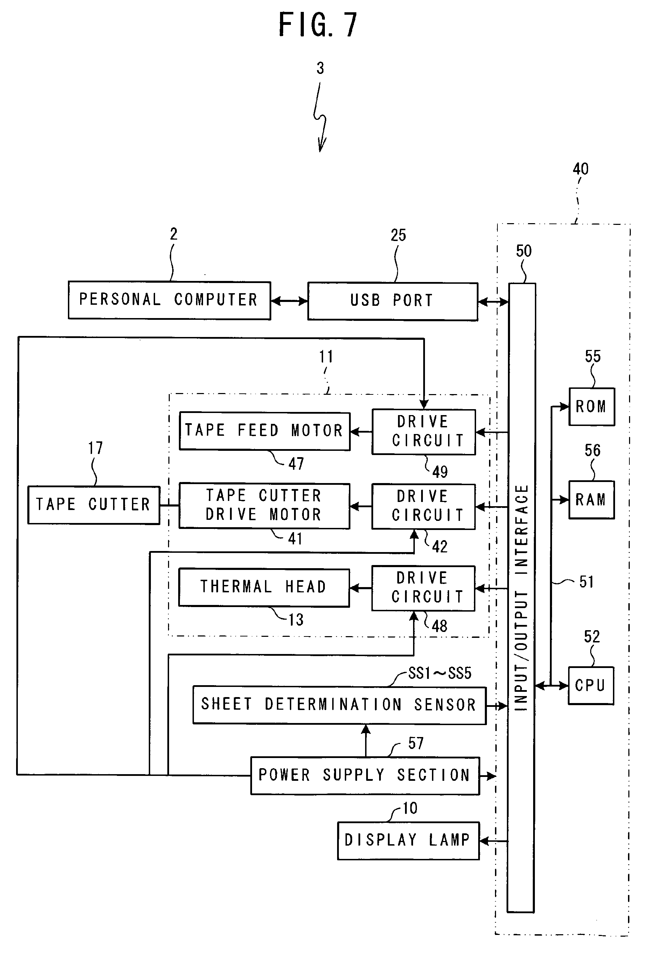

Now, the determining concave portion 14 will be described below. As shown in FIG. 6, in the determining concave portion 14, five sheet determination sensors SS1, SS2, SS3, SS4, and SS5 are arranged in an L-shape. The sheet determination sensors SS1-SS5 are constituted of a micro push button switch or the like each and used to determine the type of various kinds of sheets, the material of a thermo-sensitive sheet, the width of a roll tape, and the like. The sheet determination sensors SS1-SS5 are each a known mechanical switch consisted of a plunger, a micro-switch, etc. The upper end of each of the plungers is equipped so that it protrudes from the bottom of the determining concave portion 14. In the determining concave portion 14 as described above, the sheet determination sensors SS1-SS5 detect the existence of sensor holes 60A-60E respectively (see FIG. 4) which are formed in a sheet determination section 60 of a DK roll 69. Then, based on ON/OFF signals provided from those sheet determination sensors SS1-SS5 in a control section 40 (see FIG. 7) described below, the type of a tape loaded to the DK roll 69, the width (LW) and the length (LL) of a die-cut label, the material of a thermo-sensitive sheet, etc. are identified respectively.

It should be noted that when the sensor cover 15 is detached, the plungers of the sheet determination sensors SS1-SS5 protrude from the bottom of the determining concave portion 14 at all times, to provide the OFF state of the micro-switches. That is, if any one of the sensor holes 60A-60E in the sheet determination section 60 faces to the corresponding one of the sheet determination sensors SS1-SS5, its plunger is in an un-pressed state. Therefore, its micro-switch is turned OFF and the corresponding one of the sheet determination sensors SS1-SS5 outputs the OFF signal. On the other hand, if any one of the sensor holes 60A-60E in the sheet determination section 60 does not face to the corresponding one of the sheet determination sensors SS1-SS5, its plungers is pressed. Therefore, its micro-switch is turned ON and the corresponding one of the sheet determination sensors SS1-SS5 outputs the ON signal. In such a manner, according to the arrangement of the sensor holes 60A-60E in the sheet determination section 60, the sheet determination sensors SS1-SS5 will output a five-bit signal composed of "0" and "1". If the sheet determination sensors SS1-SS5 are all in the OFF state, that is, if the roll paper holder 67 is not loaded, the five-bit signal of "00000" will be output.

On the other hand, when the sensor cover 15 is attached, the plungers of the sheet determination sensors SS1-SS5 are all pressed always, to provide the ON state of the micro-switches. In this case, the ON signal is output from all of the sheet determination sensors SS1-SS5. That is, when the sensor cover 15 is attached, the five-bit signal of "11111" will be output.

Further, as shown in FIG. 7, the print mechanism section 11 includes a thermal head 13 and a platen roller (not shown). The tape 71 is transferred in a condition where it is sandwiched between the thermal head 13 and the platen roller. By energizing the heater elements of the thermal head 13 selectively and intermittently during this lapse of time of transferring, a desired image is printed on a predetermined region of the surface of the die-cut label 72 on the tape 71.

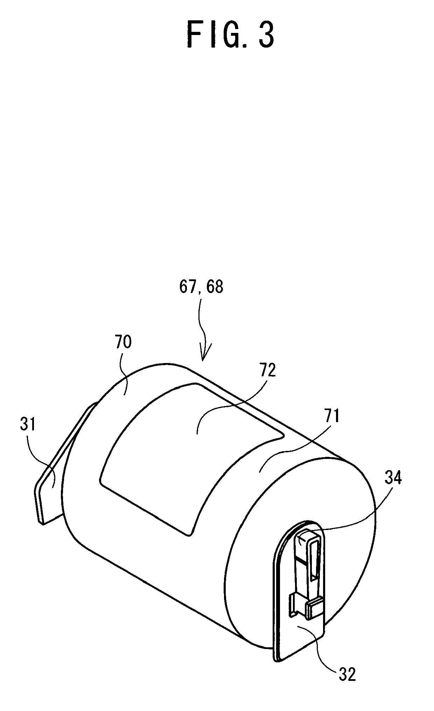

Next, the roll paper holder 67 will be described with reference to FIGS. 2-4. The roll paper holders 67 are roughly split into two types based on whether they have the later-described sheet determination section 60. The roll paper holder 67 shown in FIG. 3 is of a type of holding a DT roll 68 which does not have a sheet determination section 60. A roll paper unit 70 is constituted by winding the tape 71 around a hollow core. In the case of the DT roll 68, the roll paper unit 70 is sandwiched between a first sandwich member 31 and a second sandwich member 32. A roll shaft 73 is fixed to the second sandwich member 32. On the first sandwich member 31, a fitting section 33 is formed to which the tip of the roll shaft 73 is fitted in an attachable and detachable manner, to sandwich the roll paper unit 70 between the first sandwich member 31 and the second sandwich member 32 so that they may be united in constitution. On the outside of the second sandwich member 32, a square pole-shaped convex portion 34 is formed which is held in a condition where it is inserted into a gap between roll paper holder support sections 6. Also on the first sandwich member 31, a square pole-shaped convex portion (not shown) is formed which is held in a condition where it is inserted into a gap between roll paper holder support sections 7. Since the first sandwich member 31 and the second sandwich member 32 are constituted to be attachable and detachable, the roll paper unit 70 can be replaced. Accordingly, when a roll of paper is used up, only the roll paper unit 70 can be replaced. It is also possible to replace the roll paper unit 70 with one on which a different type of tape 71 is wound. It should be noted that to replace the existing one with the roll paper unit 70 having a different width of the tape 71, besides this new roll paper unit 70, it is also necessary to replace such a second sandwich member 32 as to have a roll shaft 73 having a length that matches the width of a new tape 71. In the case of the DK roll 68, only the roll paper unit 70 can be replaced when its roll of paper is used up, thereby the generation of garbage can be prevented.

The roll paper holder 67 shown in FIG. 4 is of a type of holding the DK roll 69 having the later-described sheet determination section 60. As shown in FIG. 4, in contrast to the above-described DT roll 68, a second sandwich member 35 has the sheet determination section 60 at its tip (lower end in a condition where it is loaded in the roll paper holder housing section 12). In the sheet determination section 60, the sensor holes 60A-60E are formed which represent the type of the roll paper holder 67. Further, in contrast to the DT roll 68 in which the first sandwich member 31 and the second sandwich member 32 are configured to be attachable and detachable, the DK roll 69 has such a configuration that the first sandwich member 31 is fixed to the roll shaft 73 and so the roll paper unit 70 cannot be replaced.

The DK roll 69 is used as loaded in the roll paper holder housing section 12 in a condition where the sensor cover 15 is detached from the roll paper holder housing section 12. In contrast, the DK roll 68 is used as loaded in the roll paper holder housing section 12 in a condition where the sensor cover 15 is attached to the roll paper holder housing section 12.

Next, the electrical configuration of the printer 3 will be described with reference to FIG. 7. As shown in FIG. 7, the printer 3 is equipped with a control section 40 that conducts control over it. The control section 40 includes a CPU 52 that controls the devices of the printer 3 and an input/output interface 50, a ROM 55, and a RAM 56 that are connected to the CPU 52 via a data bus 51.

To the input/output interface 50 are connected drive circuits 42, 48, and 49, a USB (registered trademark) port 25, the indication lamp 10, and the sheet determination sensors SS1-SS5. The drive circuit 48 drives the thermal head 13. The drive circuit 42 drives a tape cutter drive motor 41 that operates a tape cutter 17. The drive circuit 49 drives a tape feed motor 47. The USB port 25 connects with the personal computer 2. Further, a USB cable is connected to the USB port 25 and then to the personal computer 2.

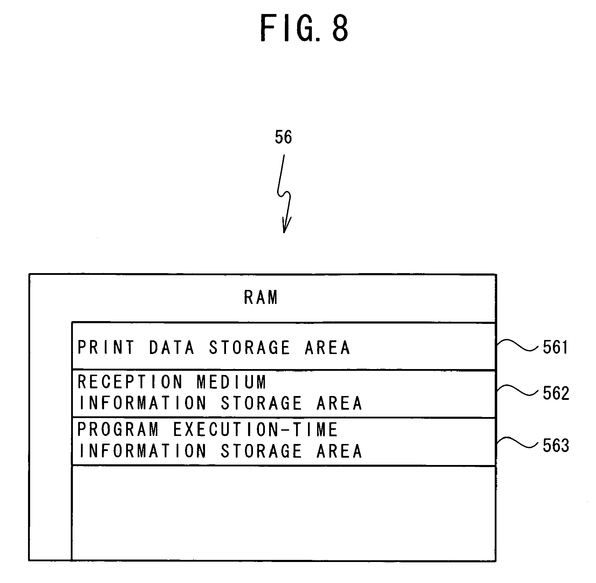

Further, in the ROM 55, print drive control program, a parameter table, and the like are stored. The print drive control program executes reading the data from a print data storage area 561 (see FIG. 8) in the RAM 56, to drive the thermal head 13 and the tape feed motor 47. The parameter table is used to determine a duty ratio for determining the amount of print energy with which to drive the thermal head 13. Further, the RAM 56 stores print data and the like transmitted from the personal computer 2. Further, a power supply section 57 supplies power in a condition where it is connected to the drive circuits 42, 48, and 49, the sheet determination sensors SS1-SS5, and the control section 40.

Next, the storage areas of the RAM 56 in the printer 3 will be described below with reference to FIG. 8. As shown in FIG. 8, the RAM 56 has the print data storage area 561, a reception medium information storage area 562, a program execution-time information storage area 563 and the like. The print data storage area 561 stores print data. The reception medium information storage area 562 stores medium information transmitted from the personal computer 2. The program execution-time information storage area 563 stores temporary data which occurs during the execution of a program. The RAM 56 further has various storage areas besides those illustrated.

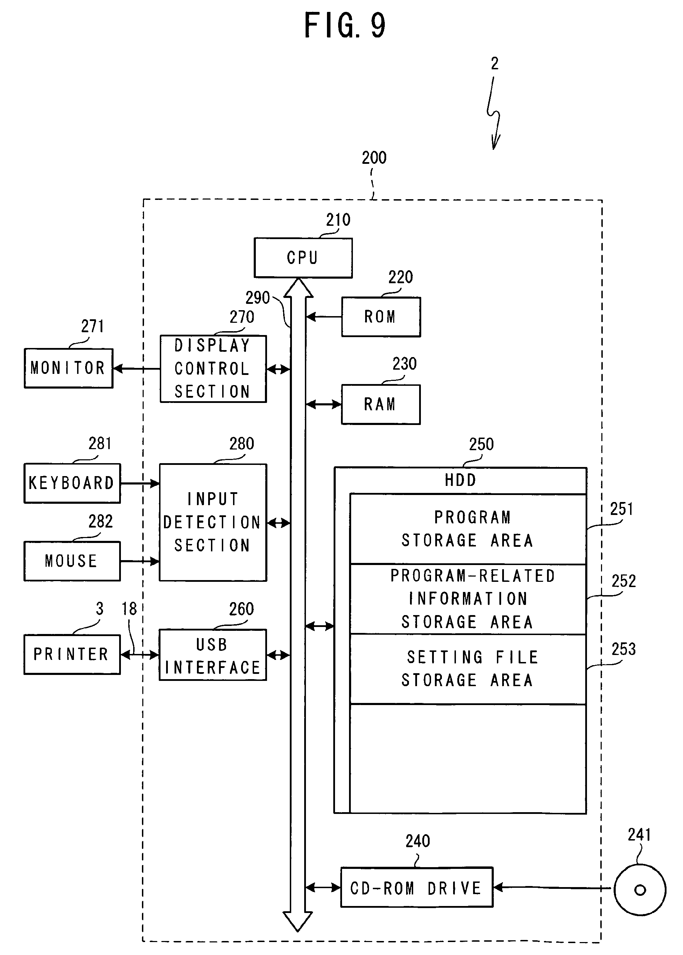

Next, the personal computer 2 of the print data creation apparatus will be described below with reference to FIGS. 1 and 9. As shown in FIG. 9, the personal computer 2 is equipped in its chassis 200 with a CPU 210 that controls the personal computer 2. To the CPU 210 are connected a ROM 220, a RAM 230, a CD-ROM drive 240, and an HDD 250 via a bus 290. In the ROM 220, programs such as the BIOS which are are executed by the CPU 210 are stored. The RAM 230 stores data temporarily. The CD-ROM drive 240 is used to read data from a CD-ROM 241, which is a storage medium of the data inserted into the CD-ROM drive 240. The HDD 250 is a data storage device.

Furthermore, to the CPU 210 are connected via the bus 290 a USB (registered trademark) interface 260, a display control section 270, and an input detection section 280 that detects an input from a keyboard 281, a mouse 282 which are connected to the input detection section 280. The USB interface 260 is used to establish communication with an external device including the printer 3. The display control section 270 performs screen display processing for a monitor 271, on which an operation display screen appears. The keyboard 281 and the mouse 282 are used by the user for inputting operations. It should be noted that the personal computer 2 may be equipped with a floppy (registered trademark) disk drive, a section to input and output voices etc., a variety of interfaces, etc.

It should be noted that the CD-ROM 241 stores a print data creation program, settings and data to be used when executing this program, etc. When the CD-ROM 241 is introduced, the contents of the CD-ROM 241 will be stored into a program storage area 251 (see FIG. 9) and a program-related information storage area 252 (see FIG. 9) which are arranged in the HDD 250. It should be noted that the method for acquiring the print data creation program for the personal computer 2 and data and the like which are used by this program is not limited to the CD-ROM 241 but it may be any other recording medium such as a floppy (registered trademark) disk and an MO (Magneto Optic Disc). Further, those program and data may be acquired from any other terminal on a network by connecting the personal computer 2 to the network.

Next, storage areas arranged in the HDD 250 of the personal computer 2 will be described below with reference to FIG. 9. As shown in FIG. 9, the HDD 250 has the program storage area 251, the program-related information storage area 252, a setting file storage area 253, and the like. The program storage area 251 stores the print data creation program and other various programs which are executed by the personal computer 2. The program-related information storage area 252 stores information such as settings, initial values, data, and the like which are necessary in executing the program. The setting file storage area 253 stores setting information about a medium loaded in the roll paper holder 67. The HDD 250 further has various storage areas besides those illustrated.

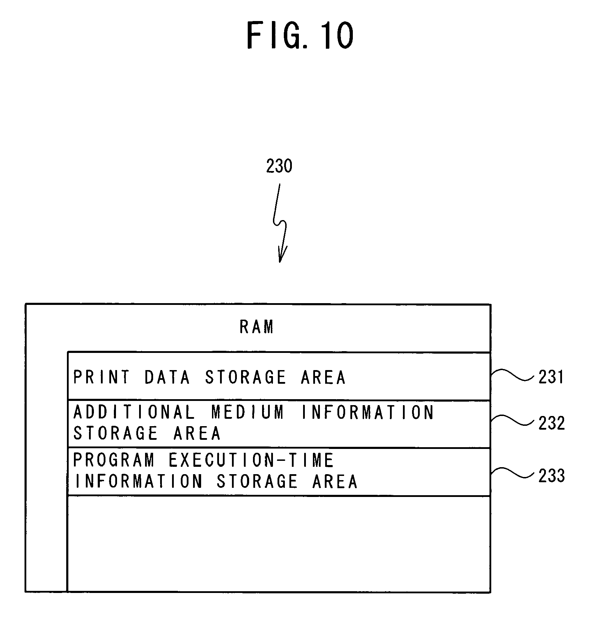

Subsequently, storage areas arranged in the RAM 230 of the personal computer 2 will be described below with reference to FIG. 10. As shown in FIG. 10, the RAM 230 has a print data storage area 231, an additional medium information storage area 232, a program execution-time information storage area 233, and the like. The print data storage area 231 stores print data. The additional medium information storage area 232 stores medium information to be added to the printer 3. The program execution-time information storage area 233 stores temporary data which is used during the execution of the program. The RAM 230 further has various storage areas besides those illustrated.

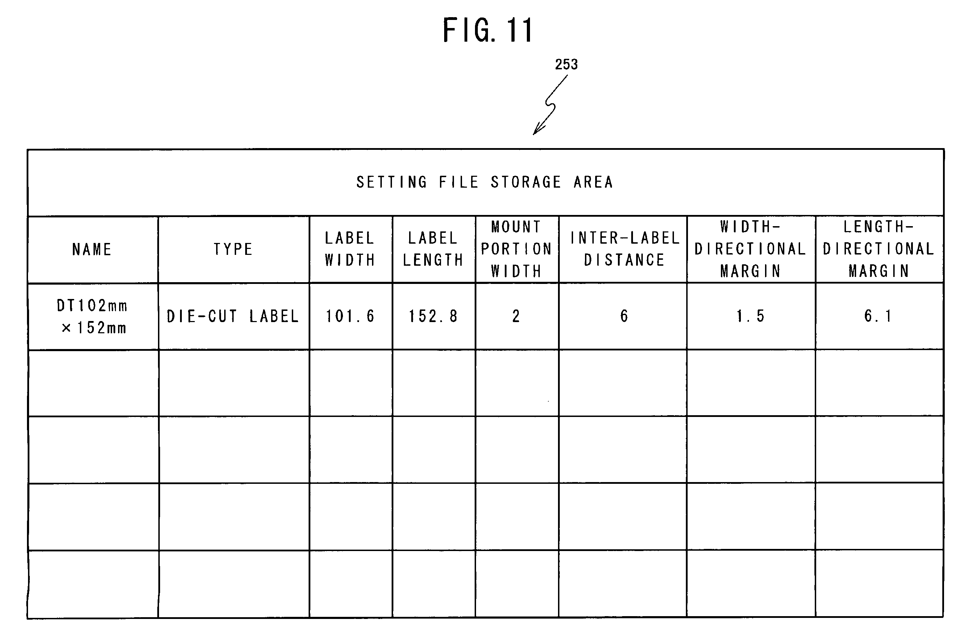

Now, the setting file storage area 253 in the HDD 250 of the personal computer 2 will be described below. As shown in FIG. 11, the setting file storage area 253 of the present embodiment has a name field, a tape type field, a label width field, a label length field, a mount portion width field, an inter-label distance field, a width-directional margin field, a length-directional margin field, and the like. The name field stores the name of the roll paper holder 67. The tape type field stores the type of tapes (which identifies the shape and the material of long tapes, die-cut labels, and the like). The label width field stores the width of the die-cut label 72 loaded in the roll paper holder 67. The label length field stores the length of the die-cut label 72 loaded in the roll paper holder 67. Further, the mount portion width field stores the length of a tape width-directional margin of the tape 71 loaded in the roll paper unit 70 except for the die-cut label 72. The inter-label distance field stores a distance between the die-cut labels 72 on the tape 71 loaded in the roll paper holder 67. The width-directional margin field stores the length of a width-directional margin on the die-cut label 72. The length-directional margin field stores the length of a length-directional margin on the die-cut label 72.

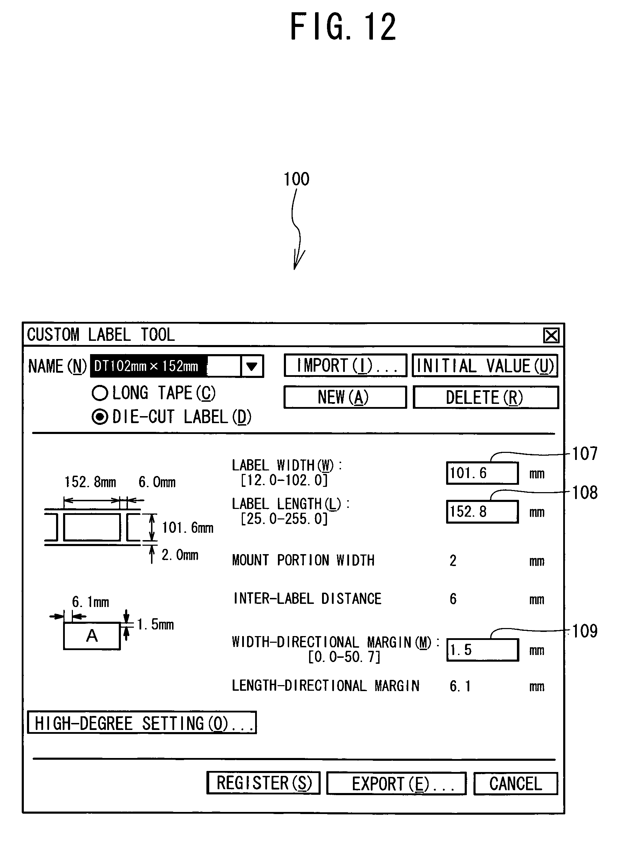

Next, printer setting alteration processing for the personal computer 2 will be described below with reference to FIGS. 12-17.

If "CUSTOM LABEL TOOL" in a "DEVICE SETTING" menu on a property screen of the printer is activated on the screen of the monitor 271 of the personal computer 2, a custom label tool screen 100 such as shown in FIG. 12 will appear on the screen of the monitor 271 of the personal computer 2. The DT roll 68 is capable of loading any tape therein. The custom label tool is used to accommodate a variety of tapes by accomplishing matching between the printer drive of the personal computer 2 and the firmware of the printer 3. The custom label tool screen 100 has on it a name entry field, a printer sheet type field, a label width entry field 107, a label length entry field 108, a mount portion width field, an inter-label distance field, a width-directional margin field 109, and a length-directional margin field as well as an import button, an initial value button, a new button, a deletion button, a high-degree setting button, a registration button, an export button, a cancel button, and the like. Further, the custom label screen 100 will show on it the size of a label that corresponds to a value entered in each of the fields.

It should be noted that the name field is used to enter, as one example, the name of a printer sheet in the roll paper holder 67, which name can be entered in a text composed of one through 31 one-byte characters or one through 15 two-byte characters. Further, the printer sheet type field is capable of selecting a long tape or a die-cut label in it. Corresponding to what is selected in this printer sheet type field, the picture of a printer sheet that appears on the screen will be changed. If the long tape is selected, none of the label length entry field 108 and the inter-label distance field will be displayed out of the label width entry field 107, the label length entry field 108, the mount portion width field, the inter-label distance field, the width-directional margin field 109, and the length-directional margin field. Further, one example of a range in which a numeral can be entered in the label width entry field 107 is 12-102mm and one example of a range in which a numeral can be entered in the label length entry field 108 is 25-255mm. It should be noted that if the product is bound for the USA, one example of the range in which a numeral can be entered in the label width entry field 107 is 0.47-4.02 inches and one example of the range in which a numeral can be entered into the label length entry field 108 is 0.98-10.04 inches. It should be noted that the value of the width of the mount portion is displayed on the screen but no numeral can be entered as the value of the width. The total label width may come in any one of the seven values of 19, 32, 42, 54, 66, 80.2, and 105. 6; however, the practical effective label width is determined by the equation of "total label width-2x2" (mm). If a label width value is entered into the label width entry field 107, a minimum total label width value out of those seven label width values will be selected which is not smaller than "the entered label width+2x2" (mm). Then, the "(total label width-label width)/2" will be the width of the mount portion. The inter-label distance is displayed on the screen but no numeral can be entered as the value of the distance because its width is fixed to 6mm. It should be noted that if a numeral is entered or changed as the value of the label width or length, the value will also be updated in conjunction with it at the left side on the screen.

Further, a length of the label's width-directional margin is entered into the width-directional margin field 109. The default value of the length of this margin is a width-directional value of 1.5mm. In the case of millimeter-unit representation, the value will take on the numeral of width-directional (0 through label width/2-0.1) and given in units of 0.1mm. On the other hand, in the case of inch-unit representation, the value will take on the numeral of width-directional (0 through label width/2-0.01) and given in units of 0.01 inch. It should be noted that the value of the length-directional margin is displayed on the screen but no numeral can be entered as the value of the length-directional margin. The length-directional margin will take on a value of 3mm if the label length is equal to or less than 100mm and the value of "label lengthx0.03" (mm) if the label length is greater than 100mm.

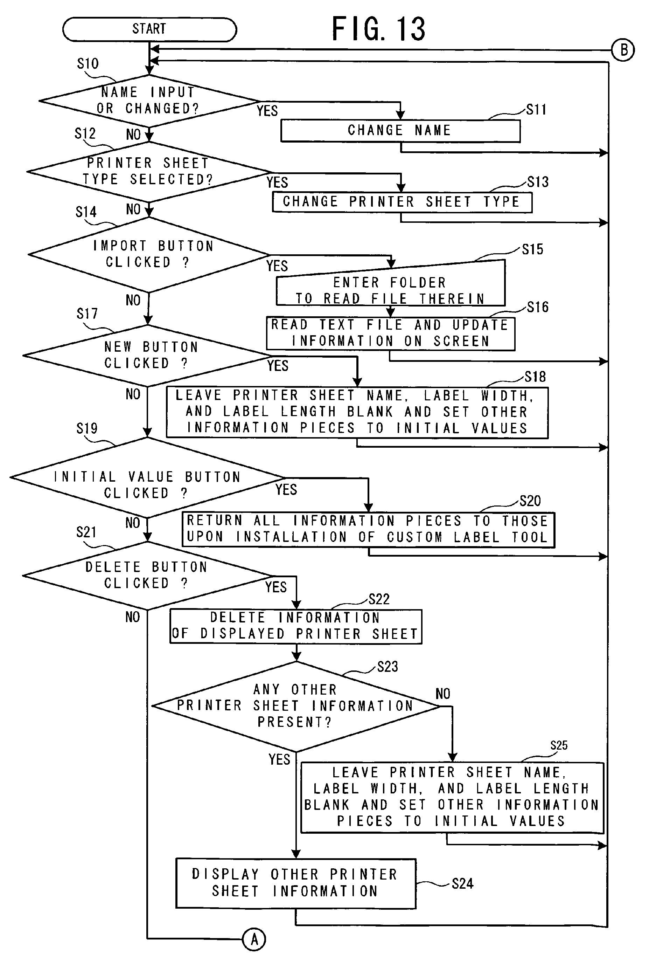

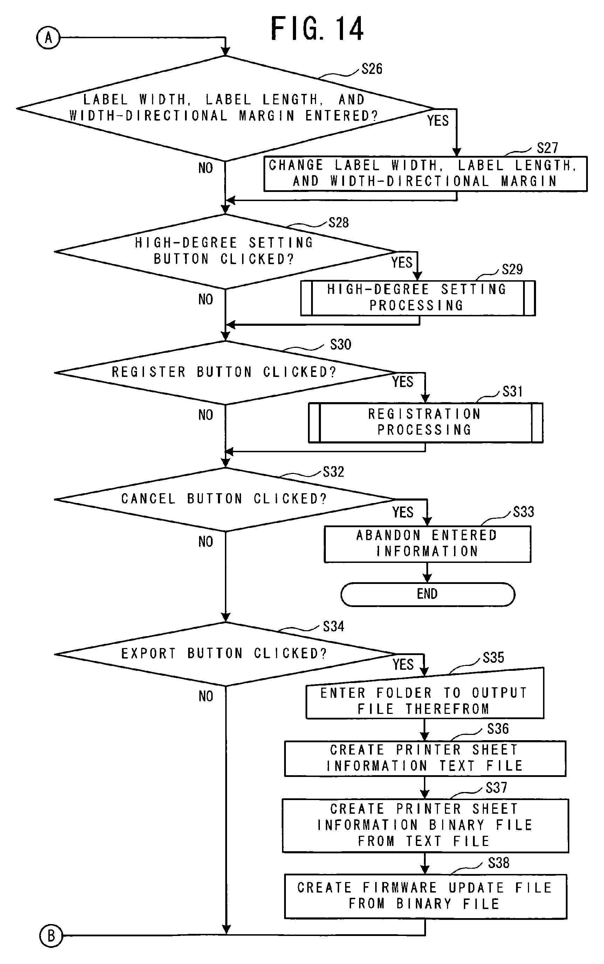

Next, a main routine will be described below with reference to FIGS. 13 and 14. It should be noted that FIG. 13 shows the anterior half and FIG. 14 shows the posterior half of the flowchart of the main routine. First, a name is entered into the name entry field on the custom label tool screen 100 (YES at S10). If the name exists already in the name entry field, the name is changed to be the entered name -(S11) . Further, if a printer sheet type is selected in the printer sheet type field (YES at S12), the printer sheet type is changed to the selected printer sheet type (S13). Further, if the "IMPORT BUTTON" is clicked (YES at S14), an external file to be read can be entered (S15), so that when this external file (text file) is read, the information is updated (S16). If the "NEW BUTTON" is clicked (YES at S17), a new printer sheet is created (S18). Specifically, the name field, the label width field, and the label length field are left blank and the width-directional margin field, the length-directional margin field, and the printer sheet's mount portion width field take on their respective default values. The defaults values are 1.5mm, 3.0mm, and 1.5mm respectively. And the high-degree setting which will be described later also takes defaults value. Further, if the "INITIAL VALUE BUTTON" is clicked (YES at S19), all changes made by the user are canceled and returns the setting contents to those upon installation of the printer driver (S20). Specifically, the screen displays on it a message which says "ALL DATA CREATED SO FAR WILL BE ABANDONED AND THE STATE UPON INSTALLATION IS RECOVERED. OK?" and an OK button and a cancel button. If the OK button is then clicked, the contents of settings are returned to those upon installation of the printer driver.

Further, if the "DELETE" button is clicked (YES at S21), the displayed printer sheet is deleted (S22). Specifically, if a printer sheet is already registered, the screen displays on it a message which says "SO-AND-SO WILL BE DELETED. OK?" as well as the OK button and the CANCEL button. If the OK button is then clicked, the registered printer sheet is deleted. If no printer sheet is registered, the screen displays on it a message which says "So-and-so is not registered. ("DELETE" button is operative to delete a displayed printer sheet already registered)" and the OK button. If the OK button is then clicked, dialog is closed. It should be noted that if there is the information about a printer sheet other than the deleted printer sheet (YES at S23), after deleting the registered printer sheet, the information about this different printer sheet is displayed (S24). If there is no other printer sheet information (NO at S23), the name field, the label width field, and the label length field of the printer sheet go blank and the other information is set an initial value (S25). Subsequently, the remaining part of the main routine will be described with reference to FIG. 14. If values are entered into the label width field, the label length field, and the width-directional margin field (YES at S26), the value of the label width, the label length, and the width-directional margin are changed in accordance with those entered values (S27).

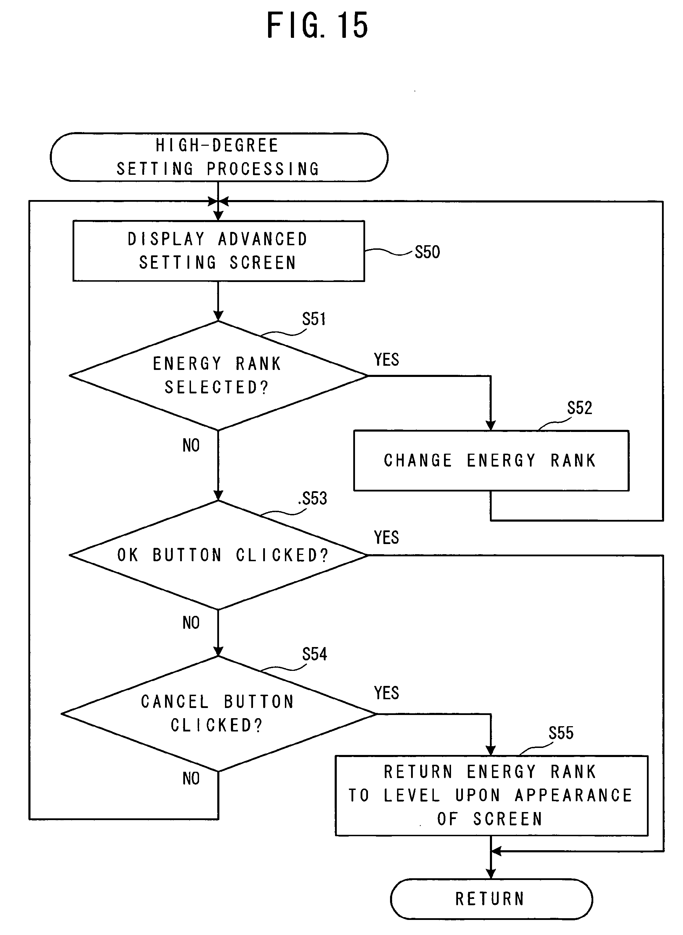

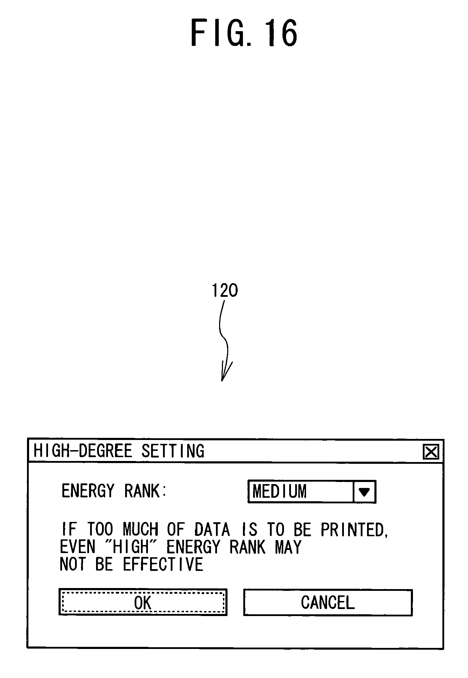

Further, if the "HIGH-DEGREE SETTING BUTTON" is clicked (YES at S28), the process performs high-degree setting (S29). The high-degree setting is performed by a subroutine shown in FIG. 15. Specifically, a high-degree setting screen 120 shown in FIG. 16 appears on the screen of the monitor 271 of the personal computer 2 (S50). The high-degree setting screen 120 displays a screen on which any one of three levels of low, medium, and high levels is selected as the energy rank of the thermal head 13 in printing. On the high-degree setting screen 120, any one of "LOW", "MEDIUM", and "HIGH" is displayed in a list box. The default setting is "MEDIUM". The "MEDIUM" means ±0% of energy which is used in printing of ordinary thermo-sensitive paper. The "LOW" means -10% of the medium energy and the "HIGH" means +10% of the medium energy. It should be noted that the high-degree setting screen 120 displays on it "IF TOO MUCH OF DATA IS TO BE PRINTED, EVEN "HIGH" ENERGY RANK MAY NOT BE EFFECTIVE". If any one of the energy ranks is selected (YES at S51), the existing rank is updated with this energy rank (S52). If the OK button is then clicked (YES at S53), the process ends the high-degree setting processing and returns to the main routine shown in FIG. 14. On the other hand, if the CANCEL button is clicked (YES at S54), the process brings the energy rank back to that upon appearance of the high-degree setting screen (S55) and returns to the main routine shown in FIG. 14. It should be noted that if the CANCEL button is not clicked (NO at S54), the process returns to S50.

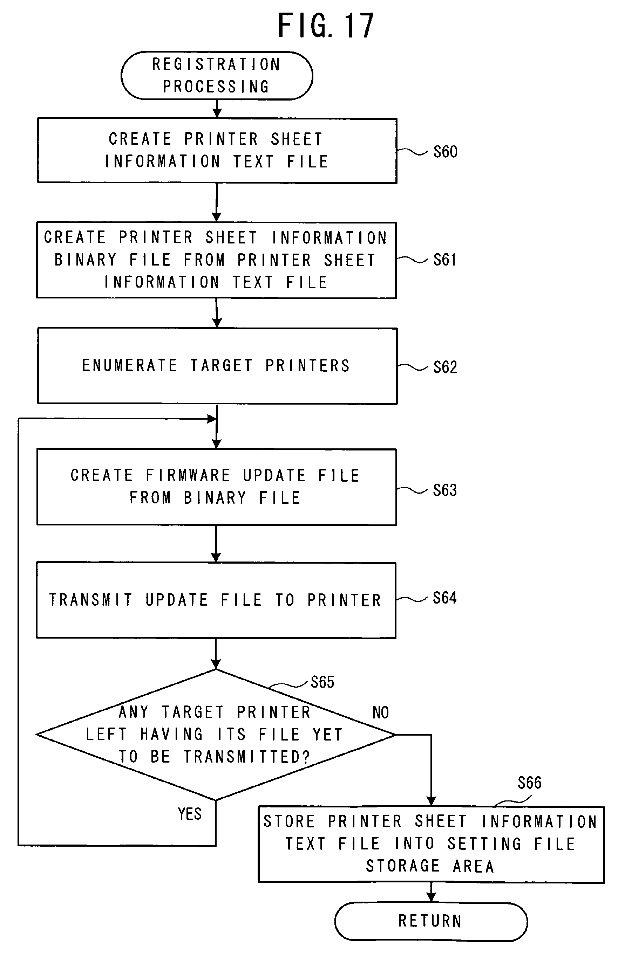

Next, if the registration button is clicked in the main routine shown in FIG. 14 (S30), the process performs registration processing (S31). Specifically, the registration processing is performed by a subroutine for the registration processing shown in FIG. 17. In the registration processing, first, a printer sheet information text file of a printer sheet displayed on the custom label tool screen 100 is created (S60). The printer sheet information text file includes the information about all of printer sheets including the displayed one and is read by the custom label tool to be used.

Subsequently, a printer sheet information binary file is created from the printer sheet information text file (S61). In processing at this step of S61, the text file is converted by a printer sheet compile tool into a binary file (ptd) which is used by the printer driver. Now, one example of the details of creating a binary file (ptd) will be described below. First, the printer sheet compile tool is activated by entering "ptq110pc.exe/S/L = <log file> <input file> <output file>" with an input/output file as an argument. In this case, the input file is "ptql10ed.txt", option "/S" means "no screen output (UI) is provided", and option "/L" means "logging is performed". If the aforementioned argument is given, the printer sheet compile tool creates a ptd file without outputting it onto the screen. If an error occurs, this error is written into a log file. If the log has an error written in it, the custom label tool displays this error.

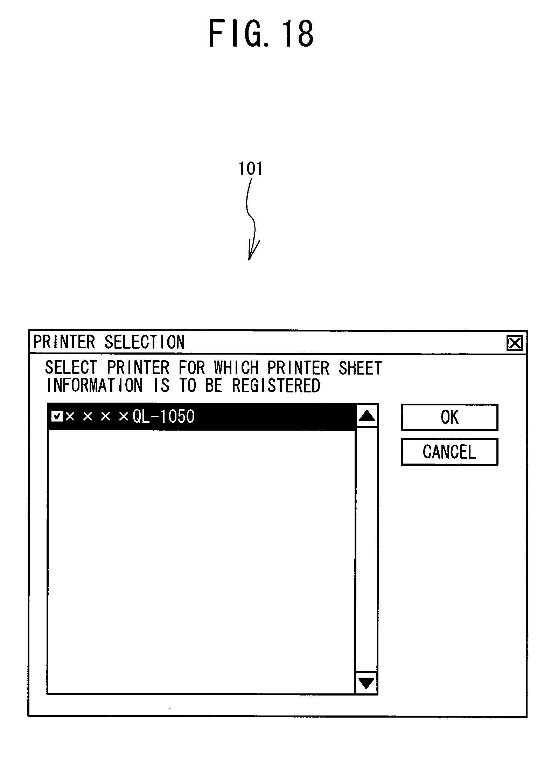

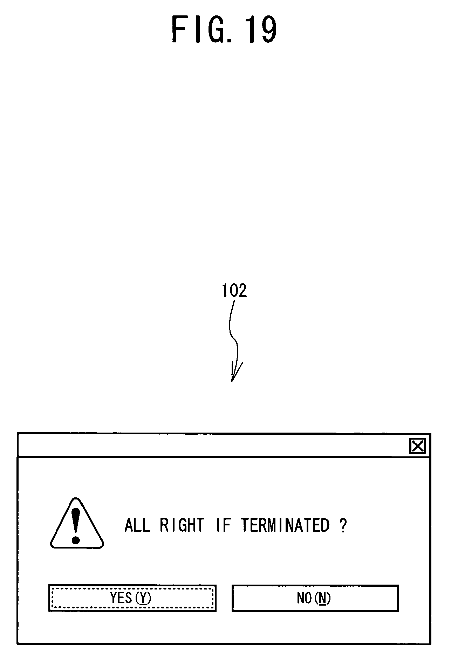

Next, as shown in FIG. 18, a printer selection screen 101 appears on the monitor 271 of the personal computer 2 (S62). A name of the printer 3, which is connected to the personal computer 2 and whose firmware is to be updated, is displayed on the printer selection screen 101. In this case, if a plurality of printers is targeted, their names will be all enumerated. If the CANCEL button is then clicked, a termination confirmation screen 102 shown in FIG. 19 will be displayed. If "YES" is then clicked, the process ends the processing. On the other hand, if "NO" is clicked, the process returns to the printer selection screen 101 shown in FIG. 18. On the printer selection screen 101, a printer that corresponds to the marked printer name field displayed will be subjected to the updating of the firmware.

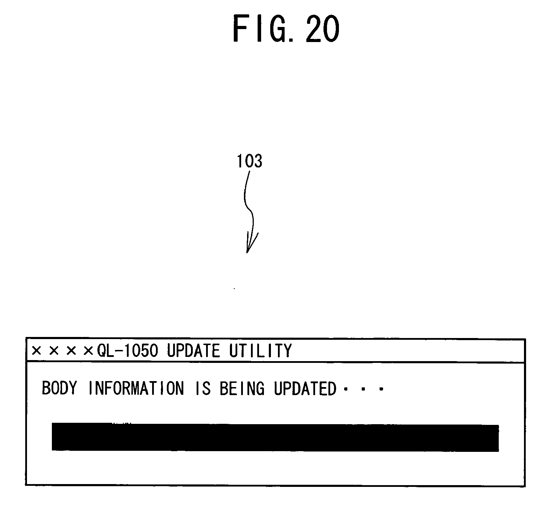

If the OK button is then clicked on the printer selection screen 101, a file (bin) for updating the firmware for the target printer 3 is created from the printer sheet information binary file which is created in the processing of S61 (S63). This processing is performed by a printer sheet addition tool when it reads the printer sheet information binary file (ptd). If the power supply of the target printer 3 is in the ON state, the process displays an update utility screen 103 shown in FIG. 20 and transmits an update file to the target printer 3 (S64).

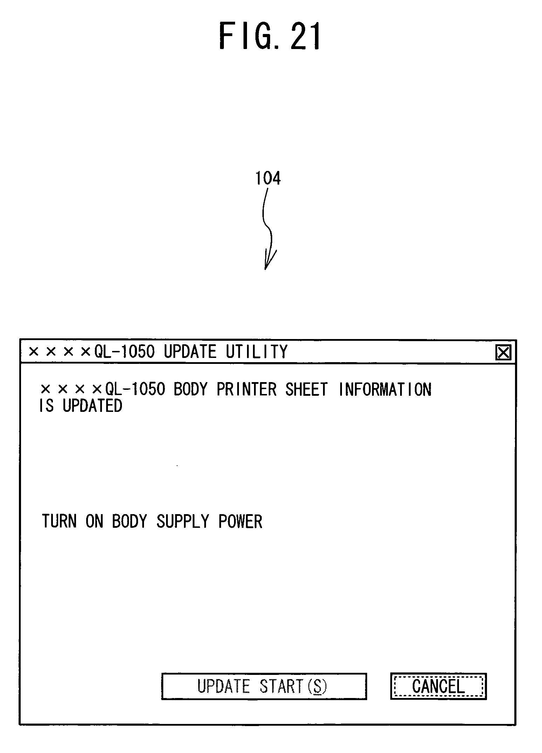

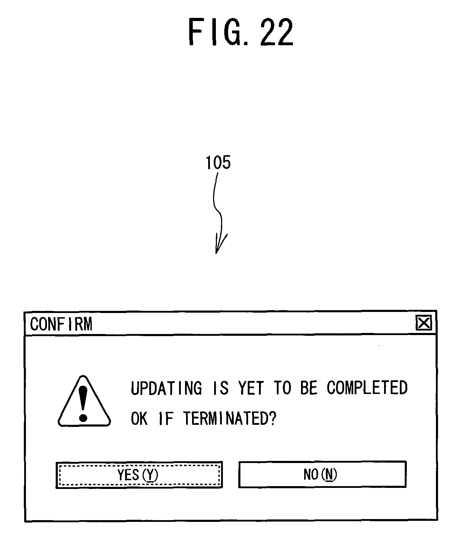

On the other hand, if the power supply of the target printer 3 is not in the ON state, "PRINTER SHEET INFORMATION IN THE BODY IS UPDATED. TURN ON THE POWER SUPPLY OF THE BODY" is displayed on an update utility screen 104 shown in FIG. 21, to prompt the user to turn ON the power supply of the target printer 3. If the CANCEL button is clicked on the update utility screen 104, a confirmation screen 105 shown in FIG. 22 is displayed and the user is prompted to confirm that the processing may be terminated.

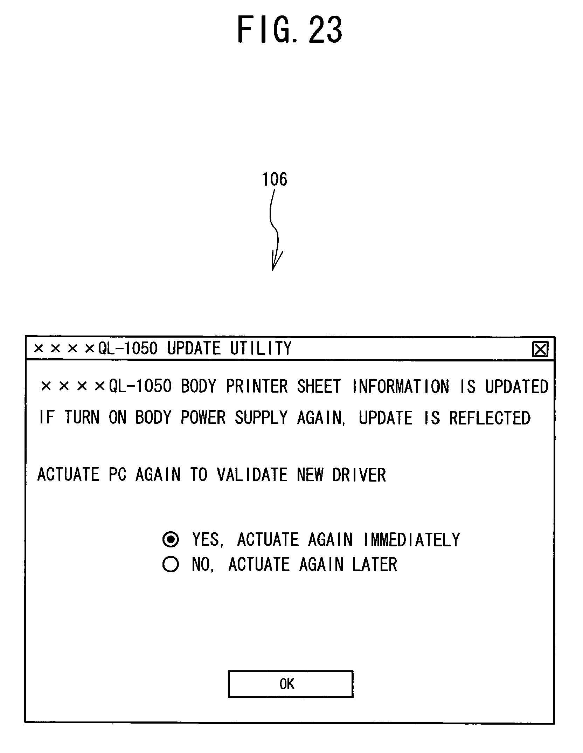

If a plurality of printers is selected on the printer selection screen 101 shown in FIG. 18, the processing of S63 through S65 is repeated (YES at S65 → S63 → S64) . If there is no more update file that is not transmitted (NO at S65), the printer sheet information text file is stored into the setting file storage area (driver folder) on the HDD 250 in the personal computer 2 (S66). Then, an update utility screen 106 shown in FIG. 23 is displayed, and the user is prompted to restart the personal computer 2 to enable a new driver. Then, the process returns to the main routine shown in FIG. 14. In such a manner, in a print data creation apparatus of the present embodiment and a print system including the print data creation apparatus, only by changing the settings of the printer on the setting alteration screen of the print data creation apparatus, it is possible to update setting information to be referred to by the printer driver and the firmware for the printer.

It should be noted that if the CANCEL button is clicked on the custom label tool screen 100 shown in FIG. 12 (YES at S32), the process abandons the input information (S33) and ends the processing.

Also, if the EXPORT button (E) is clicked on the custom label tool screen 100 shown in FIG. 12 as described in the main routine of FIG. 14 (S34), a folder to which a file is to be output is input (S35) and a printer sheet information text file is created in this folder (S36). Subsequently, a printer sheet information binary file (ptd) is created from this printer sheet information text file (S37).
Subsequently, an update file (bin) of the firmware for the target printer 3 is created from the binary file (ptd) (S38). It should be noted that in this series of export processing pieces, a text file is created which includes the printer sheet information text file only of printer sheet information being displayed, the printer sheet information binary file (ptd), and all the printer sheet information managed by the update file (bin) of the firmware and the tool. Therefore, those four files can be incorporated into an installer to be distributed. It is thus possible to activate the printer sheet addition tool upon installation of the driver, to also update the firmware of the printer 3.

It should be noted that the present disclosure is not limited to the embodiment detailed above but can be modified variously. In the above-described embodiment, the printer 3 is not limited to such a type as to print information on a tape loaded in a roll paper holder but may be a printing apparatus that prints information on tapes, cut sheets, continuous forms, etc. loaded in a cassette. Further, those printing apparatuses may employ such a printing method as an ink jet method or a laser printing method. The items of medium information may as well be caused to correspond to the print medium or the printing apparatus. Further, although the above embodiment has used the personal computer 2 to create print data, any other type of computer may be employed.

In the present embodiment, it is assumed that if the five-bit signal of "11111" is detected by the sheet determination sensors SS1-SS5, the DT roll 68 is identified, and any other value except "00000" is detected, the DK roll 69 is identified. However, the DT roll 68 need not always be identified if "11111" is detected but may be identified if a predetermined value other than "00000" is detected. The number of the predetermined values need not be one only.

The present embodiment has employed such a configuration as to attach the sensor cover 15 to the printer 3 when using the DT roll 68. However, to use the DT roll 68, the sheet determination section 60 may be equipped instead of attaching the sensor cover 15. However, if the sensor cover 15 is attached, the sheet determination section 60 can be eliminated from the DT roll, thereby the amount of materials to be used can be reduced.

## Claims

1. A print data creation apparatus (2) connectable to a printer (3) for printing on a print medium (71)to create print data to be printed by the printer (3), the print data creation apparatus (2) comprising:
a display device (271) for displaying a variety of information;
a setting alteration screen display control device (270) for displaying a setting alteration screen (100) for using to change settings of the printer (3) on the display device (271);
a setting file storage device (253) for storing a setting file including setting information to be referred to by a printer driver of the printer (3);
a setting file alteration device (210, S66) for changing contents of the setting file stored in the setting file storage device (253) based on the settings of the printer (3) changed on the setting alteration screen (100);
an update information creation device (210, S63) for creating update information for updating firmware of the printer (3) in response to a change in the setting file brought about by the setting file alteration device (210) ; and
an update information transmission device (210, S64) for transmitting the update information created by the update information creation device (210) to the printer (3) .

2. The print data creation apparatus (2) according to claim 1, further comprising:
a numeral display section (107, 108, 109) that is arranged on the setting alteration screen (100) for displaying each numeral which is set to each of items to be set, wherein:
the numerical in the numerical display section (107, 108, 109) is configurable arbitrarily within a predetermined range.

3. The print data creation apparatus (2) according to claim 1 or 2, wherein
the print data creation apparatus (2) is capable of connecting to a plurality of printers (3), and
the update information transmission device (210) is configured to transmit the same update information to the plurality of printers (3) which uses the same printer driver.

4. The print data creation apparatus (2) according to any one of claims 1 to 3, wherein
the printer setting items displayed on the setting alteration screen (100) are information relating to a tape (71) as a print medium attachable to the printer (3).

5. The print data creation apparatus (2) according to claim 4, wherein
if the tape (71) is a die-cut tape in which a plurality of labels (72) each of which is formed into a predetermined shape are arranged continually on a sheet of release paper (71), a size of the label (72) can be set on the setting alteration screen (100).

6. The print data creation apparatus (2) according to any one of claims 1 to 5, wherein
the setting file whose contents are changed by the setting file alteration device (210) and the update information created by the update information creation device (210) can be output as a file for incorporating into a driver installer which installs the printer driver into the print data creation apparatus (2).

7. A computer-readable control program for a print data creation apparatus (2) connectable to a printer (3) for printing on a print medium (71) to create print data to be printed by the printer (3), the control program comprising:
setting alteration screen display control instructions for displaying a setting alteration screen (100) which is used to change settings of the printer (3);
setting file alteration instructions for changing contents of a setting file including setting information which is referred to by a printer driver of the printer (3) based on the settings of the printer (3) changed on the setting alteration screen (100);
update information creation instructions for creating update information which updates firmware of the printer (3) in response to a change in the setting file brought about by the setting file alteration instructions; and
update information transmission instructions for transmitting the update information created by the update information creation instructions to the printer (3).

8. The control program for the print data creation apparatus (2) according to claim 7, further comprising
numeral display instructions for displaying each numeral which is arbitrarily set in a predetermined range arranged on the setting alteration screen (100) for each of items to be set.

9. The control program for the print data creation apparatus (2) according to claim 7 or 8, wherein
the update information transmission instructions transmit the same update information to a plurality of printers (3) which uses the same printer driver.

10. The control program for the print data creation apparatus (2) according to any one of claims 7 to 9, wherein
the printer setting items displayed on the setting alteration screen (100) are information relating to a tape (71) as a print medium attachable to the printer (3).

11. The control program for the print data creation apparatus (2) according to claim 10, wherein
if the tape (71) is a die-cut tape in which a plurality of labels (72) each of which is formed into a predetermined shape are arranged continually on a sheet of release paper (71), a size of the label (72) can be set on the setting alteration screen (100).

12. The control program for the printing data creation apparatus according to any one of claims 7 to 11, wherein
the setting file whose contents are changed by the setting file alteration instructions and the update information which is created by the update information creation instructions can be output as a file which is incorporated into a driver installer which installs the printer driver into the print data creation apparatus (2) .

13. A printing system comprising:
the printing data creation apparatus (2) according to claim 1; and
a printer (3) that prints the print data on a print medium, the printer (3) including:
an update information reception device (25) for receiving the update information transmitted by the update information transmission device; and
a firmware update device (52) for updating the firmware of the printer (3) based on the update information received by the update information reception device (25).

14. A method to control a print data creation apparatus (2) connectable to a printer (3) for printing on a print medium (71) to create print data to be printed by the printer (3), comprising:
displaying a setting alteration screen (100) which is used to change settings of the printer (3);
changing contents of a setting file including setting information which is referred to by a printer driver of the printer (3) based on the settings of the printer (3) changed on the setting alteration screen (100);
creating update information which updates firmware of the printer (3) in response to a change in the setting file brought about by the setting file alteration instructions; and
transmitting the update information created by the update information creation instructions to the printer (3).
